Europäisches Patentamt

European Patent Office

Office européen des brevets

(11) Publication number: **0 273 220 B1**

(12) EUROPEAN PATENT SPECIFICATION

(45) Date of publication of patent specification: **11.11.92**    (51) Int. Cl.⁵: **B64C 1/14**

(21) Application number: **87117772.1**

(22) Date of filing: **01.12.87**

(54) **Cartridge shade assembly.**

(30) Priority: **29.12.86 US 947202**

(43) Date of publication of application:
**06.07.88 Bulletin 88/27**

(45) Publication of the grant of the patent:
**11.11.92 Bulletin 92/46**

(84) Designated Contracting States:
**DE FR GB**

(56) References cited:
**FR-A- 2 171 137**

(73) Proprietor: **Magee, Ted N.**
**948 Jackling Drive**
**Hillsborough California 94010(US)**

(72) Inventor: **Magee, Ted N.**
**948 Jackling Drive**
**Hillsborough California 94010(US)**

(74) Representative: **Dipl.-Phys.Dr. Manitz**
**Dipl.-Ing., Dipl.-W.-Ing. Finsterwald Dipl.-Ing.**
**Grämkow Dipl.-Chem.Dr. Heyn Dipl.-Phys.**
**Rotermund**
**Morgan, B.Sc.(Phys.) Robert-Koch-Strasse 1**
**W-8000 München 22(DE)**

## Description

### Background of the Invention

Windows of large passenger airplanes typically have plastic, opaque shades on them which can be raised and lowered as desired to alternately open and block light flow through the windows. These shades, when soiled or otherwise marked on or damaged, often require replacement. Such replacement is a lengthy task and on which requires disassembly of a relatively large number of small parts merely to replace the shade itself. Generally, only the shade is replaced, the other parts of the shade assembly being used over and over again. Thus, because of these and other drawbacks, a need exists for a low cost shade assembly which can be quickly and easily replaced in the manner of replacing a cartridge to thereby minimize labor and production costs. The present invention satisfies this need.

FR-A-21 71 137 teaches a shade assembly in accordance with the preamble of claim 1, which comprises a molded frame and metal guides for the shade which are secured to the frame.

### SUMMARY OF THE INVENTION

The present invention is directed to a cartridge shade assembly which is simple and rugged in construction, can be quickly and easily installed in place or removed from its mounting when replacement is necessary, and which can be quickly and easily assembled as a cartridge for placement at a particular location, such as in the window opening adjacent to a passenger seat of a commercial or private airplane.

To this end, the present invention proposes a cartridge shade assembly as defined in claim 1.

The shade member is designed and constructed to have an inherent bias such that one side of the shade member always tends to go into compression while the opposite side of the shade member tends to go into tension. Thus, as the pull bar is shifted in one direction to close the central opening of the frame with the shade member, the shade member will uncoil from its scrolled condition in the recess of the frame and, conversely, the shade member will return to the recess by scrolling as the pull bar moves in the opposite direction and as the shade member moves out of closing relationship to the central opening of the frame.

A transparent plastic pane can also be provided with the assembly. Such a pane has a pair of side margins which are removably received within a second pair of grooves in the sides of the frame. thus, both the pull bar and the pane can be quickly and easily inserted into respective grooves in the sides of the frame in constructing the assembly. Thus, when properly constructed, the assembly of the present invention will form a cartridge which can be made in volume and used as desired for quick replacement purposes rather than, as in the case of the conventional shade units for an airplane window, to disassemble the various parts of the shade unit, replace the damaged shade member, and then reassemble the parts of the unit, all of which takes a considerable amount of time and effort.

The primary advantage of the present invention is to provide an improved shade assembly in cartridge form wherein the assembly includes a frame having a central opening which is opened and closed when a shade member carried in scroll form by the frame is moved in opposed direction relative to and across the frame, whereby the shade assembly can be installed as a unit quickly and easily and can be removed as a unit when replacement of the shade member is required.

Another advantage of the present invention is to provide a cartridge shade assembly of the type described wherein the shade member and a pull bar at one end thereof can be quickly and easily assembled to the frame to minimize production costs yet the cartridge shade assembly has a attractive appearance not withstanding its construction in the form a cartridge thereof.

Other details and advantages of this invention will become apparent as the following specification progresses, reference being had to the accompanying drawings for an illustration of an embodiment of the invention.

### In the Drawings:

Fig. 1 is a front elevational view of the cartridge shade assembly of the present invention, parts being broken away to illustrate details of construction;

Fig. 2 is a cross sectional view taken along line 2-2 of Fig. 1;

Fig. 3 is a cross sectional view taken along line 3-3 of Fig. 1;

Fig. 4 an enlarged, perspective view of a part of the cartridge shade assembly of Figs. 1-3, showing the grooves for the edge margins of a shade member and a transparent pane;

Fig. 5 is a fragmentary, cross sectional view of the frame for the shade assembly, showing the relative sizes of the grooves for the shade member and pane, respectively;

Fig. 6 is a perspective view of the middle one of three stacked parts which form the frame;

Fig. 7 is a perspective view of a first outer part of the frame;

Fig. 8 is a perspective view of the other outer part of the frame; and

Fig. 9 is an enlarged fragmentary cross-sectial view of the shade member showing the various layers thereof.

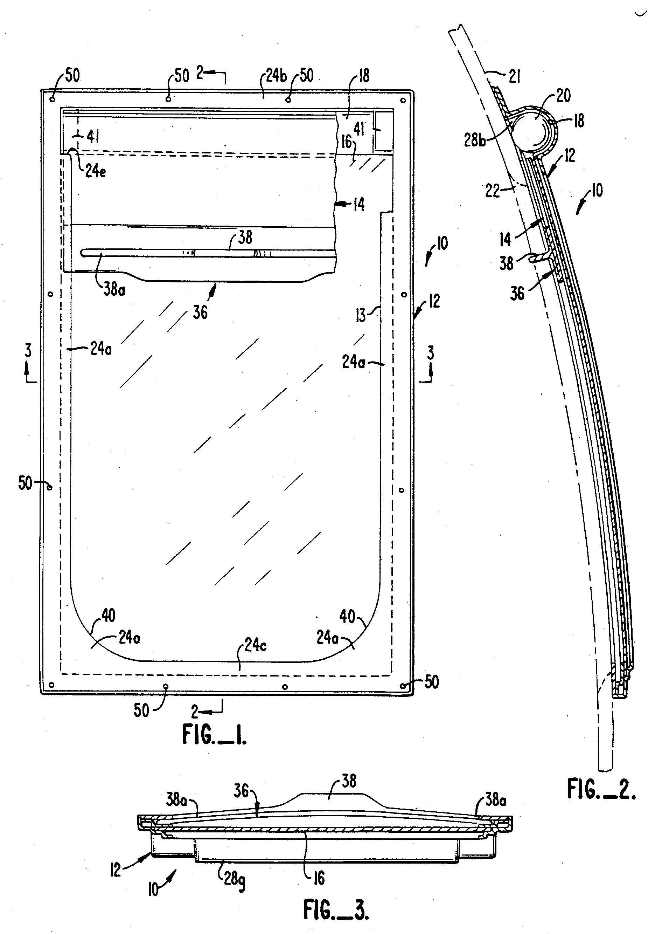

The cartridge shade assembly of the present invention is broadly denoted by the numeral 10 and includes a frame 12 having a large, central opening 13 and providing the means for mounting a flexible, plastic, opaque shade member 14 and a relatively rigid, transparent, plastic pane 16. The frame has a recess 18 near the normally uppermost end thereof for receiving the shade member in the form of a scroll 20 (Fig. 2).

Frame 12 is adapted to be mounted in any suitable manner in a fixed position, such as on mounting structure 21 of an airplane, so as to provide a window shade across a window opening 22 (Fig. 2) of structure 21. Thus, shade member 14 can be pulled downwardly and upwardly relative to frame 12 so as to alternately close and open the central opening 13 of frame 12 and thereby opening 22 of airplane body 21. As the shade member is pulled downwardly relative to frame 12, the shade member unrolls or unscrolls from its scrolled form in recess 18. Conversely, as the shade member is raised, it scrolls or winds up in recess 18 due to the inherent resilience of the shade member which biases it into the scroll form automatically with the raising of the shade member.

Frame 12 is made of any suitable, relatively rigid plastic material. A material suitable for this purpose is a polycarbonate, such as LEXAN® made by General Electric Plastics Corporation. Frame 12 is made of three parts 24, 26 and 28 which are suitably bonded together to form a unitary construction for frame 12.

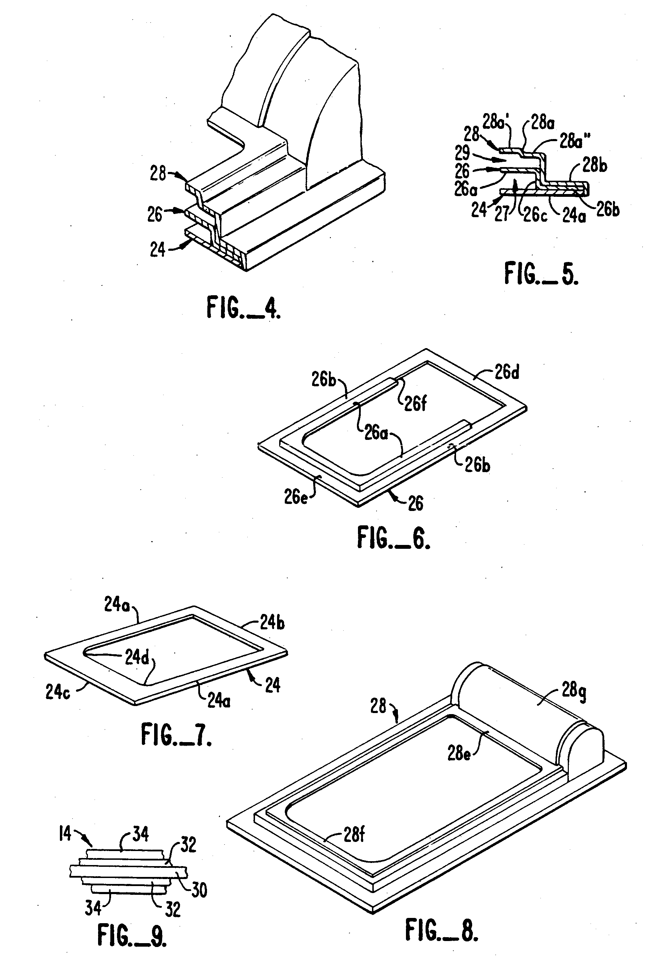

In the alternative, parts 24, 26 and 28 can be integral with each to form a one-piece construction. Fig. 4 shows a portion of the rear face of frame 12 and Fig. 5 shows a cross sectional view of the three parts 24, 26 and 28 and their relative positions. The parts are all frame like in construction in that they have a top, bottom and pair of sides. The sides of each of frame parts 24, 26 and 28 are curved in the manner shown in Fig. 2 so as to conform to the curvature of structure 21. Such structure typically follows the inner surface contour of the fuselage of the airplane with which shade assembly 10 is used. The sides of parts 24, 26 and 28 could be straight for other applications.

Frame part 24 has a pair of sides 24a, a top strip 24b (Fig. 1), a bottom strip 24c. Top strip 24b (Fig. 1), a bottom strip 24c. Top strip 24b and bottom strip 24c are integral with sides 24a, and sides 24a have curved, corner webs 24d near the bottom strip 24c as shown in Fig. 1. Each side 24a has a rectangular notch 24e (Fig. 1) near the upper end thereof for forming the front opening of recess 18.

Part 26 has a pair of curved sides which are formed by offset side portions 26a and 26b interconnected by a web 26c (Fig. 5). Each side portion 26a forms with the adjacent side 24a of part 24 a groove denoted by the numeral 27 for receiving an end margin of a curtain bar hereinafter described.

Frame part 26 (Fig. 6) includes a top strip 26d and a bottom strip 26e, the top and bottom strips being integral with side strip portions 26b. The length of side strip portions 26a is less than that of side strip portions 26b so as to present a rectangular notch 26f (Fig. 6) to accomodate scroll 20 when the latter is inserted into recess 18 after frame parts 24, 26 and 28 have been coupled together in operative fashion shown in Figs. 4 and 5.

Frame part 28 includes a pair of sides formed by side portions 28a and 28b (Fig. 5), the side portions being interconnected by a web 28c. Side portions 26b and 28b are connected to each other and to sides 24 by welds or by an adhesive so that the three frame parts 24, 26 and 28 form a unitary frame, namely frame 12.

Each side portion 28a has a first part 28a' which is offset from and parallel to a second part 28a''. This configuration for each side portion 28a presents a groove 29 which is of two widths as shown in Fig. 6, the wider width being near the inner periphery of frame 12 and the narrower width being near the outer periphery of frame 12. The two different widths are provided to accomodate panes 16 of different widths, the narrower width being provided for a relatively thin pane 16 and the wider width being provided for a relatively thick pane. A thicker pane is used in windows of an airplane near the noisier parts of the airplane, such as near the engine or near the front end of the airplane, a thicker pane providing a greater reduction than a thinner pane in the noise level in the airplane cabin with which shade assembly 10 is associated.

Frame part 28 further has a top strip 28e (Figs. 4 and 8) and a bottom strip 28f (Fig. 8), top and bottom strips 28e and 28f being integral with the sides 28a of frame part 28. Also, a shell like, elongated member 28g (Fig. 8) is integral with frame part 28 near the upper end thereof, member 28g having a front opening 28h (Fig. 2) defined by notch 24e (Fig. 1) through which scroll 20 can be inserted into the interior of member 28g.

Shade member 14 can be of any suitable construction so long as it is flexible and can be scrolled or wound up into a scroll 20 when the lower end of the shade member is raised. A typical construction for shade member 14 is one which includes a thin layer 30 (Fig. 9) of aluminum which is coated on opposed sides with layers 32 of a suitable plastic, such as Mylar®. The outer faces of the Mylar layers are preferably coated with another plastic material such as Tedlar(™), layers 30, 32 and 34 being sufficiently thin such as 0.127mm (0.005 inch) in thickness. Moreover, shade member 14 with its various layers is designed so that one face of the shade member is always under compression as the other face of the shade member is always under tension. This feature will assure that the shade member will roll into the form of scroll 20 as the lower end of the shade member is lifted with reference to the lower part of assembly 10 as shown in Fig. 1.

A pull bar 36 is secured to the lower end of shade member 14 in any suitable manner. Typically, bar 36 is of a suitable, relatively rigid plastic material such as polycarbonate. The lower margin of the shade member 14 can, for instance, be sandwiched between two halves of bar 36 and then secured by rivets or bonded by adhesive to the bar. A laterally projecting handle 38 on bar 36 allows the bar to be raised and lowered by merely grasping the handle 38 with the fingers of one hand. Preferably, bar 36 has an outward bow in it as shown in Fig. 3. This bow feature is to inpart a convex front face shape to the front face of shade member 14 to provide an aesthetic appearance for the shade member when it is pulled downwardly and partially or fully covers the opening 14.

The length of bar 36 is sufficient to allow the end margins of the bar 36 to enter and to be normally shiftably received within grooves 27 at the sides of frame 12, frame 12 being formed as shown in Fig. 5. Likewise, the width of shade member 14 is the same width as bar 36 so that the shade member will also enter and be normally shiftable in grooves 27 along with bar 36. Grooves 27 extend completely to the bottom of the frame 12, and the outer ends 38a (Fig. 1) of projection 38 eventually engage the inner peripheral edges 40 (Fig. 1) at the bottom of opening 13 so that such edges 40 serve as stops for the downward movement of bar 36 and thereby shade member 14.

Notch 24e (Fig. 1) is formed in frame 12 to allow insertion of bar 36 partially into recess 18, sufficiently far so that the end margin of the bar 36 can become aligned with grooves 27 and can then be pulled downwardly relative to recess 18 and into the grooves 27, the upper ends of grooves 27 being open and communicating with recess 18 to thereby allow the ends of the bar 36 to readily enter the grooves 27 and shade member 14 scrolled in recess 18. When properly scrolled and received in recess 18, shade member 14 will have a tangential portion aligned with the open ends of grooves 27 so that, once the end margins of bar 36 are in grooves 27, the bar can be shifted manually up and down and thereby alternately close and open the opening 13 formed by frame 12.

Shell-like member 28g has a pair of curved shoulders 41 (Fig. 1) integral therewith at the ends thereof and within recess 18. The cylindrical inner surfaces of shoulders 41 define bearing surfaces for mounting the ends of the scroll 20 when shade member 14 is in a scroll form within recess 18. Thus, the entire outer surface which defines the scroll 20 does not contact the major inner peripheral surface of recess 18, thereby minimizing the frictional contact between shade member 14 and the interior surface of member 28g.

To construct assembly 10, the three parts 24, 26 and 28 are molded separate and, then they are mated and secured together to form frame 12. Then, transparent plastic pane 16 is inserted at the side margins thereof into grooves 29 through the open upper ends thereof, the pane being forced into grooves 29 until the pane reaches the bottom ends of the groove. When this occurs, the upper marginal edge of pane 16 is directly below the shoulders 41 (Fig. 1).

After insertion of pane 16 in place, bar 36 is forced into grooves 27. This occurs after the shade member 14 has been wound in the form of scroll 20 and inserted into recess 18. To cause the bar 36 to become aligned with the open upper ends of grooves 27, the bar is placed in the position directly and horizontally aligned with recess 18. The bar is forced inwardly into notch 24e (Fig. 1) into the recess until the end margins of the bar become aligned with the open upper ends of grooves 27. Then a downward force is exerted on the bar 36 until the end margins thereof enter and slide along the grooves 27, whereupon the shade member 14 is then coupled with frame 12 and the assembly 10 is then ready for mounting to body 21.

The frame 12 is provided with a plurality of holes 50 therethrough for receiving fasteners for attaching the frame and thereby assembly 10 to body 21.

Assembly 10 is placed against the outer surface of structure 21 and then fasteners (not shown) are coupled through holes 50 and to structure 21 for attaching assembly 10 to structure 21. When this occurs, a portion of structure 21 overlies or lies in front of the open front end of recess 18 so as to cover the recess and thereby conceal scroll 20 in the recess. When assembly 10 is mounted in this manner, the shade member 14 can be moved downwardly and upwardly by pulling downwardly or upwardly on bar 36. The upper margin of body 21 which defines opening 22 will be engaged by bar 36 to limit the upward movement of the bar. The downward movement of the bar is limited by marginal edges 40 of webs 24d (Fig. 1).

A major feature of assembly 10 is its quick assembly as a cartridge into position adjacent to structure 21 for attachment thereto. When it is desired to replace shade member 14, such as when it is damaged, the entire assembly 10 can be quickly and easily removed from attachment to structure 21 and replaced with a new cartridge shade assembly 10. In this way, the old assembly can be discarded or rejuvenated as desired or deemed necessary.

Certain structural changes can be made to assembly 10. For instance, the sides of frame 12 can be straight instead of curved so that the sides will be coplanar with the top and bottom of the frame. Also, the frame can have shapes other than the rectangular shapes shown in Fig. 1. The shade assembly can also be adapted for use in areas other than airplane use. For instance, it can be used in vans and stationwagons and can be used even for home use, such as closures for cabinets. Furthermore, the shade member 14 can be transparent, translucent or perforate to suit specific application needs.

## Claims

1.  A cartridge shade assembly (10) comprising:
    a frame (12) adapted to be mounted in a fixed position;
    a housing (28g) integrally formed on the frame for defining a shell-like recess (18) therein; a flexible shade member (14) capable of being wound in the form of a scroll (29), said shade member in the form of a scroll in the recess;
    a pull bar (36) secured to one end of the shade member (14);
    and characterized by further comprising
    means integrally formed with the frame (12) and adjacent to the path of travel of the bar (36) for guiding the bar and thereby the shade member (14) longitudinally of the frame (12) as the bar (36) and shade member (14) move alongside of the path, the frame and the shade member being thus movable as a unit into and out of said fixed position to provide a cartridge-like replaceability for said frame (12) and shade member (14).

2.  An assembly as set forth in claim 1, wherein said recess (18) is near one end of the frame.

3.  An assembly as set forth in claim 1, wherein is included a transparent pane (16) adjacent to and extending longitudinally of said path of travel of the shade member (14) and bar (36).

4.  An assembly as set forth in claim 1, wherein the frame (12) has a pair of curved sides (24a, 26a).

5.  An assembly as set forth in claim 1, wherein the recess (18) is formed near the upper end of the frame (12).

6.  An assembly as set forth in claim 1, wherein is included surface means (41) at the ends of the recess (18) for forming bearings for engaging the shade member (14) when the latter is in a form of a scroll (20) in the recess (18).

7.  An assembly as set forth in claim 1, wherein the shade (14) is opaque to visible light.

8.  An assembly as set forth in claim 1, wherein said guide means includes means on the sides of the frame (12) for forming respective grooves (27), the end margins of the bar (36) being removably received within respective grooves (27).

9.  An assembly as set forth in claim 1, wherein the frame (12) is formed from a number of molded parts (24, 26, 28), the parts having respective sides (24a, 26a) which are spaced apart to form a pair of side grooves (27), the end margins of the bar (36) being removably received within respective grooves (27).

10. An assembly as set forth in claim 9, wherein the sides (24a, 26a) of the frame (12) and the grooves (27) are curved.

11. An assembly as set forth in claim 10 , wherein the frame (12) has a notch (24e) near the recess (18) thereof, the notch (24e) being aligned with the recess (18), said bar (36) being insertable into the notch (24e) to allow the ends of the bar (36) to become aligned longitudinally with the grooves (27) whereby the ends of the bar (36) can enter the grooves (27) after being pulled longitudinally of the frame (12) away from the recess (18).

12. An assembly as set forth in claim 11 , wherein the entire extent of the shade member (14) is in the form of a scroll (20) in the recess (18) when the bar (36) is in a position in the notch (24e).

13. An assembly as set forth in claim 1, wherein the frame (12) has a pair of opposed sides (24a, 26a), each side having a pair of adjacent grooves (27, 29) therein, each groove (27; 29) on one side being aligned with a groove (27; 29) on the opposite side of the frame (12), the ends of the bar (36) being movably received in a first set of grooves (27), and including a pane (16) provided with a pair of opposed side margins, the pane (16) being across the opening (13) of the frame (12) with the side margins of the pane (16) in the second set of grooves (29).

14. An assembly as set forth in claim 13, wherein the pane (16) is a transparent, plastic, bendable panel.

15. An assembly as set forth in claim 13, wherein each set of grooves (27, 29) has open ends near and communicating with the recess (18), the end margins of the bar being (36) insertable into the open ends of the first set of grooves (27), and the pane (16) being insertable into the open ends of the second pair of grooves (29).

16. An assembly as set forth in claim 1, wherein the bar (36) is bowed outwardly of the central opening (13) of the frame (12).

**Patentansprüche**

1. Kasetten-Vorhanganordnung (10), welche umfaßt:
einen zum Anbringen in einer festen Position ausgelegten Rahmen (12);
ein integral an dem Rahmen ausgebildetes Gehäuse (28g), um darin eine mantelartige Vertiefung (18) zu bestimmen; ein flexibles Vorhangteil (14), das in Form einer Rolle (29) aufgewikkelt werden kann, wobei das Vorhangteil in Form einer Rolle sich in der Vertiefung befindet;
einen an einem Ende des Vorhangteils (14) befestigten Zugstab (36);
und dadurch gekennzeichnet, daß die Anordnung weiter umfaßt
integral mit dem Rahmen (12) ausgebildete und dem Laufweg des Stabes (36) zum Führen des Stabes benachbartes Mittel zum Führen des Stabes und dadurch des Vorhangteils (14) in Längsrichtung des Rahmens (12), wenn der Stab (36) und das Vorhangteil (14) sich längs des Weges bewegen, so daß der Rahmen und das Vorhangteil als eine Einheit in die festgelegte Position und aus ihr heraus bewegbar sind, um eine kassettenartige Ersetzbarkeit für den Rahmen (12) und das Vorhangteil (14) zu schaffen.

2. Anordnung nach Anspruch 1, bei der die Vertiefung (12) sich in der Nähe eines Endes des Rahmens befindet.

3. Anordnung nach Anspruch 1, bei der eine transparente scheibe (16) benachbart zu dem Laufweg des Vorhangteils (14) und des Stabes (36) vorhanden ist, die sich in. dessen Längsrichtung erstreckt.

4. Anordnung nach Anspruch 1, bei der der Rahmen (12) zwei gebogene Seitenwände (24a, 26a) besitzt.

5. Anordnung nach Anspruch 1, bei der die Vertiefung (18) in der Nähe des oberen Endes des Rahmens(12) ausgebildet ist.

6. Anordnung nach Anspruch 1, bei der Flächenmittel (41) an den Enden der Vertiefung (18) enthalten ist zum Ausbilden von Lagern zum Eingriff mit dem Vorhangteil (14), wenn das letztere sich in Form einer Rolle (20) in der Vertiefung (18) befindet.

7. Anordnung nach Anspruch 1, bei der der Vorhang (14) für sichtbares Licht undurchlässig ist.

8. Anordnung nach Anspruch 1, bei der das Führungsmittel Mittel an den Seiten des Rahmens (12) enthält zum Ausbilden jeweiliger Nuten (27), wobei die Endbereiche des Stabes (36) entfernbar innerhalb der jeweiligen Nuten (27) aufgenommen sind.

9. Anordnung nach Anspruch 1, bei der der Rahmen (12) aus einer Anzahl geformter Teile (24, 26, 28) gebildet ist, die Teile jeweilige Seitenwände (24a, 26a) besitzen, die voneinander zur Bildung von einem Paar Seitennuten (27) Abstand voneinander haben, wobei die Endbereiche des Stabes (36) entfernbar innerhalb jeweiliger Nuten (27) aufgenommen sind.

10. Anordnung nach Anspruch 9, bei der die Seitenwände (24a, 26a) des Rahmens (12) und die Nuten (27) gebogen sind.

11. Anordnung nach Anspruch 10, bei der der Rahmen (12) eine Ritze (24e) in der Nähe seiner Vertiefung (18) besitzt, welche Ritze (24e) mit der Vertiefung (18) ausgerichtet ist, der Stab (36) in die Ritze (24e) einsetzbar ist, um die Enden des Stabes (36) in Längsrichtung mit den Nuten (27) ausgerichtet werden zu lassen, wodurch die Enden des Stabes (36) in die Nuten (27) eintreten können, nachdem er in Längsrichtung des Rahmens (12) von der Vertiefung (18) weggezogen ist.

12. Anordnung nach Anspruch 11, bei der die gesamte Länge des Vorhangteils (14) sich in Form einer Rolle (20) in der Vertiefung (18) befindet, wenn der Stab 836) in einer Position in dem Einschnitt (24e) ist.

13. Anordnung nach Anspruch 1, bei der der Rahmen (12) ein Paar einander gegenüberliegende Seitenwände (24a, 26a) besitzt, jede Seitenwand ein Paar benachbarte Nuten (27, 29) darin aufweist, jede Nut (27; 29) an einer Seitenwand mit einer Nut (27; 29) an der gegenüberliegenden Seitenwand des Rahmens (12) ausgerichtet ist, die Enden des Stabes (36) bewegbar in einer ersten Gruppe von Nuten (27) aufgenommen sind und eine Platte (16) enthalten, die mit einem Paar einander gegenüberliegender Seitenbereiche versehen ist, wobei die Platte (16) sich quer über der Öffnung (13) des Rahmens (12) befindet, während die Seitenbereiche der Platte (16) in der zweiten Gruppe von Nuten (29) sind.

14. Anordnung nach Anspruch 13, bei der die Platte (12) eine transparente biegbare Kunststoffplatte ist.

15. Anordnung nach Anspruch 13, bei der jede Gruppe von Nuten (27, 29) offene Enden in der Nähe der Vertiefung (18) und in Verbindung mit ihr besitzt, die in Bereiche des Stabes (36) in die offenen Enden der ersten Gruppe von Nuten (27) einsetzbar sind und die Platte 816) in die offenen Enden des zweiten Paares von Nuten (29) einsetzbar ist.

16. Anordnung nach Anspruch 1, bei der der Stab (36) von der Zentralöffnung (13) des Rahmens (12) nach außen weggebogen ist.

**Revendications**

1. Ensemble de rideau en cartouche (10), comprenant:
   un cadre (12) adapté pour être monté dans une position fixe;
   un boitier (28g) formé de manière intégrale sur le cadre afin d'y définir un évidement en forme de coquille (18); un organe de rideau flexible (14) capable d'être enroulé sous la forme d'un rouleau (29), ledit organe de rideau ayant la forme d'un rouleau dans ledit évidement;
   une barrette de traction (36) fixée à une extrémité dudit organe de rideau (14);
   caractérisé en ce qu'il comprend en outre
   des moyens formés de façon intégrée au cadre (12) et adjacents au trajet de déplacement de la barrette (36) afin de guider la barrette et par conséquent l'organe de rideau (14) longitudinalement le long du cadre (12) lorsque la barrette (36) et l'organe de rideau (14) se déplacent le long du trajet, le cadre et l'organe de rideau pouvant ainsi être déplacés en une unité vers ladite position fixe et en éloignement de celle-ci afin d'assurer une possibilité de remplacer ledit cadre (12) et ledit organe de rideau (14) à la manière d'une cartouche.

2. Ensemble selon la revendication 1, caractérisé en ce que ledit évidement (18) est proche d'une extrémité du cadre.

3. Ensemble selon la revendication 1, caractérisé en ce qu'il comprend un panneau transparent (16) au voisinage de et s'étendant longitudinalement le long dudit trajet de déplacement de l'organe de rideau (14) et de la barrette (36).

4. Ensemble selon la revendication 1, caractérisé en ce que le cadre a une paire de côtés incurvés (24a, 26a).

5. Ensemble selon la revendication 1, caractérisé en ce que l'évidement (18) est formé au voisinage de l'extrémité supérieure du cadre (12).

6. Ensemble selon la revendication 1, caractérisé en ce qu'il comprend des parties de surface (41) aux extrémités de l'évidement (18) afin de former des paliers pour engager l'organe de rideau (14) lorsque ce dernier a la forme d'un rouleau (20) dans l'évidement (18).

7. Ensemble selon la revendication 1, caractérisé en ce que le rideau (14) est opaque à la lumière visible.

8. Ensemble selon la revendication 1, caractérisé en ce que lesdits moyens formant guide comprennent des moyens sur les côtés du cadre (12) pour former des gorges respectives (27), les marges d'extrémité de la barrette (36) étant reçues de manière amovible à l'intérieur de gorges respectives (27).

9. Ensemble selon la revendication 1, caractérisé en ce que le cadre est formé d'un certain nombre de parties moulées (24, 26, 28), ces parties ayant des côtés respectifs (24a, 26a) qui sont espacés pour former une paire de gorges latérales (27), les marges d'extrémité de la barrette (36) étant reçues de manière amovible à l'intérieur de gorges respectives (27).

**10.** Ensemble selon la revendication 9, caractérisé en ce que les côtés (24a, 26a) du cadre (12) et les gorges (27) sont incurvés.

**11.** Ensemble selon la revendication 10, caractérisé en ce que le cadre (12) présente une entaille (24e) au voisinage de son évidement (18), l'entaille (24e) étant alignée avec l'évidement (18), ladite barrette (36) pouvant être introduite dans l'entaille pour permettre aux extrémités de la barrette (36) de venir en alignement longitudinal avec les gorges (27) dont il résulte que les extrémités de la barrette (36) peuvent pénétrer dans les gorges (27) après avoir été tirées longitudinalement le long du cadre (12) en éloignement de l'évidement (18).

**12.** Ensemble selon la revendication 11, caractérisé en ce que la totalité de l'extension de l'organe de rideau (14) a la forme d'un rouleau (29) dans l'évidement (18) lorsque la barrette (36) est en position dans l'entaille (24e).

**13.** Ensemble selon la revendication 1, caractérisé en ce que le cadre (12) comporte une paire de côtés opposés (24a, 26a), chaque côté présentant une paire de gorges adjacentes (27, 29), chaque gorge d'un côté (27; 29) étant alignée avec une gorge (27; 29) sur le côté opposé du cadre (12), les extrémités de la barrette (36) étant reçues en déplacement dans un premier groupe de gorges (27), et comprenant un panneau (16) présentant une paire de marges latérales opposées, le panneau (16) traversant l'ouverture (13) du cadre (12) avec les marges latérales du panneau (16) étant dans le second groupe de gorges (29).

**14.** Ensemble selon la revendication 13, caractérisé en ce que le panneau (16) est un panneau transparent en matière plastique qui peut être courbé.

**15.** Ensemble selon la revendication 13, caractérisé en ce que chaque groupe de gorges (27, 29) a des extrémités ouvertes au voisinage de et en communication avec l'évidement (18), les marges d'extrémité de la barrette (36) pouvant être introduites dans les extrémités ouvertes du premier groupe de gorges (27), et le panneau (16) pouvant être introduit dans les extrémités ouvertes de la seconde paire de gorges (29).

**16.** Ensemble selon la revendication 1, caractérisé en ce que la barrette (36) est incurvée vers l'extérieur de l'ouverture centrale (13) du cadre (12).

FIG._I.

FIG._2.

FIG._3.

FIG.__4.

FIG.__5.

FIG.__6.

FIG.__7.

FIG.__8.

FIG.__9.